# EUROPEAN PATENT APPLICATION

(11) **EP 4 814 878 A1**
(43) Date of publication of application: **30.09.2026**
(21) Application number: 25305411.8
(22) Date of filing: 24.03.2025
(51) Int. Cl.: G06T 15/20, G06T 17/00, G06T 7/55, H04N 19/597, H04N 19/70

(54) **TRANSMITTING 3D GAUSSIAN SPLATTING AS SPHERES WITH REDUCED HIGH-LEVEL SYNTAX**

(71) Applicant: InterDigital CE Patent Holdings, SAS, 75017 Paris (FR)
(72) Inventor: THUDOR, Franck, 35000 RENNES (FR); CHUPEAU, Bertrand, 35700 RENNES (FR); SANDRI, Gustavo, 35510 CESSON-SEVIGNE (FR)
(74) Representative: Interdigital

(57) **Abstract**

A method comprising:
obtaining (70) a set of representations, each representation representing one subpart of a plurality of subparts representative of a 3D scene and being of a first type or a second type, the first type being a 3D gaussian based on a covariance matrix, the second type being a simplified 3D gaussian in which the covariance matrix is replaced by an element depending on a scalar value;
obtaining (70) a set of representations, each representation representing one subpart of a plurality of subparts representative of a 3D scene and being of a first type or a second type, the first type being a 3D gaussian based on a covariance matrix, the second type being a simplified 3D gaussian in which the covariance matrix is replaced by an element depending on a scalar value;
signaling (71) the set of representations in image data, the image data being organized such that all representations of a same type are signaled consecutively; and,
signaling (72) at least one first information representative of a number of representations of one type among the first and the second type in the image data.

## Description

### BACKGROUND

The present application generally relates to a method and an apparatus for 3D data compression and processing.

Advances in 3D capturing and rendering technologies are enabling new applications and services in fields of autonomous driving, cultural heritage archival, immersive telepresence, and virtual/augmented reality.

One of these new services is the generation of new views (i.e., New View Generation: NVG) of a complex scene from a limited number of captured views.

Neural Radiance Fields (NeRFs) have proved to be a remarkable method to render new views of a complex scene from a limited number of captured views. During the last three years, a lot of progress has been made to improve the first initial work described in documentMildenhall, B. S. (2021). Nerf: Representing scenes as neural radiance fields for view synthesis, Communications of the ACM, (pp. 99-106*).* However computational complexity remains a main bottleneck of this method since NeRFs aims at evaluating a luminance of the scene for all points of a 3D volume.

On the other hand, 3D Gaussian (3DG) splatting has emerged as a new scene representation that is able to render 3D radiance fields with a same quality than NeRF but much faster. Indeed, 3DG splatting avoids unnecessary computation in an empty space in order to decrease training time and achieve real-time rendering.

3DG splatting has already been used in the past in the computer graphics community but recently, with the advent of artificial intelligence and the arrival of very powerful GPUs, new learning techniques have become popular, creating a paradigm-shift in the realm of 3D scene representation.

A main drawback of 3DG splatting (3DGS) is that it requires a large amount of memory for a storage of the Gaussians. In their original paper (Kerbl, B. K. (2023). 3D Gaussian Splatting for Real-Time Radiance Field Rendering, ACM Transactions on Graphics (TOG), (pp. 1-14*)),* the authors report a memory consumption significantly higher than NeRF-based solutions which may be a hurdle for a deployment of 3DGS in consumer devices or low-end GPUs. The solution proposed in the original paper generates a large amount of 3DGS due to a densification process during optimization (cloning and splitting). Furthermore, there is a large number of attributes characterizing each 3DG. All in all, the transmission and manipulation of 3DGs is more complicated than it should be.

It is desirable to propose solutions to reduce the bulk (i.e., the bitrate) of transmission of the 3DGs.

### BRIEF SUMMARY

In a first aspect, one or more of the present embodiments provide a method comprising:
obtaining a set of representations, each representation representing one subpart of a plurality of subparts representative of a 3D scene and being of a first type or a second type, the first type being a 3D gaussian based on a covariance matrix, the second type being a simplified 3D gaussian in which the covariance matrix is replaced by an element depending on a scalar value;
signaling the set of representations in image data, the image data being organized such that all representations of a same type are signaled consecutively; and,
signaling at least one first information representative of a number of representations of one type among the first and the second type in the image data.

In a second aspect, one or more of the present embodiments provide a device comprising electronic circuitry configured for:
obtaining a set of representations, each representation representing one subpart of a plurality of subparts representative of a 3D scene and being of a first type or a second type, the first type being a 3D gaussian based on a covariance matrix, the second type being a simplified 3D gaussian in which the covariance matrix is replaced by an element depending on a scalar value;
signaling the set of representations in image data, the image data being organized such that all representations of a same type are signaled consecutively; and,
signaling at least one first information representative of a number of representations of one type among the first and the second type in the image data.

In an embodiment of the first or the second aspect, the signaling of the at least one first information depends on a third information indicating with a first value that the image data comprise representations of the second type and with a second value that the image data comprise only representations of the first type.

In an embodiment of the first or the second aspect, the image data are organized such that all representations of the second type precede all representations of the first type in the image data.

In an embodiment of the first or the second aspect, the at least one first information comprises an index of a last representation of the second type in an order of signaling of the representations in the image data.

In an embodiment of the first or the second aspect, the at least one first information comprises an information representative of an index of a first representation of the first type in an order of signaling of the representations in the image data.

In an embodiment of the first or the second aspect, the at least one first information comprises a second information signaling a number of representations of another type among the first type and the second type.

In a third aspect, one or more of the present embodiments provide a method comprising:
obtaining image data representing a 3D scene, the image data comprising a set of representations organized such that all representations of a same type are signaled consecutively;
obtaining from the image data at least one first information representative of a number of representations of one type among a first and a second type in the image data, each representation representing one subpart of a plurality of subparts representative of the 3D scene, the first type being a 3D gaussian based on a covariance matrix, the second type being a simplified 3D gaussian in which the covariance matrix is replaced by an element depending on a scalar value;
decoding at least one representation of the set of representations in function of its type, the type of the at least one representation being determined based on a position of the representation in the image data and on the at least one first information; and,
reconstructing at least partially the 3D scene based on the decoded at least one representation.

In a fourth aspect, one or more of the present embodiments provide a device comprising electronic circuitry configured for:
obtaining image data representing a 3D scene, the image data comprising a set of representations organized such that all representations of a same type are signaled consecutively;
obtaining from the image data at least one first information representative of a number of representations of one type among a first and a second type in the image data, each representation representing one subpart of a plurality of subparts representative of the 3D scene, the first type being a 3D gaussian based on a covariance matrix, the second type being a simplified 3D gaussian in which the covariance matrix is replaced by an element depending on a scalar value;
decoding at least one representation of the set of representations in function of its type, the type of the at least one representation being determined based on a position of the representation in the image data and on the at least one first information; and,
reconstructing at least partially the 3D scene based on the decoded at least one representation.

In an embodiment of the third and the fourth aspect, the obtaining of the at least one first information depends on a third information indicating with a first value that the image data comprise representations of the second type and with a second value that the image data comprise only representations of the first type.

In an embodiment of the third and the fourth aspect, the image data are organized such that all representations of the second type precede all representations of the first type in the image data.

In an embodiment of the third and the fourth aspect, the at least one first information comprises an index of a last representation of the second type in an order of signaling of the representations in the image data.

In an embodiment of the third and the fourth aspect, the at least one first information comprises an information representative of an index of a first representation of the first type in an order of signaling of the representations in the image data.

In an embodiment of the third and the fourth aspect, the at least one first information comprises a second information signaling a number of representations of another type among the first type and the second type.

In a fifth aspect, one or more of the present embodiments provide a non-transitory information storage medium storing program code instructions for implementing the method of the first or the third aspect.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1A describes an example of a context in which following embodiments can be implemented;
FIG. 1B is a block diagram illustrating an example system according to one or more embodiments of the present disclosure;
FIG. 2 is a process diagram illustrating an example 3DG generation process according to some embodiments;
FIG. 3 illustrates various embodiments of a process signaling a simplified representation of a 3DG;
FIG. 4 illustrates an orthogonal projection of an ellipsoid E;
FIG. 5 illustrates the first and second embodiment;
FIG. 6 illustrates various embodiments of a process of receiving a simplified representation of a 3DG;
FIG. 7 represents an example of signaling of a set of representations representative of a 3D scene according to an embodiment;
FIG. 8 represents an example of decoding of a set of representations representative of a 3D scene according to the seventh embodiment; and,
FIG. 9 illustrates an organization of a bitstream comprising representations of different types.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

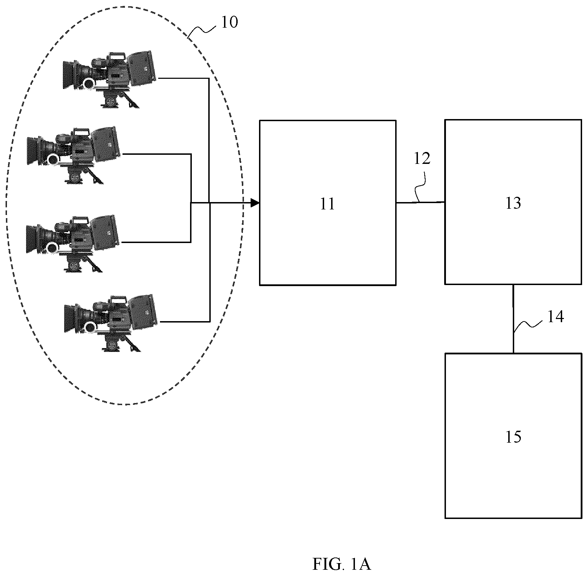

**FIG. 1A** describes an example of a context in which following embodiments can be implemented.

In FIG. 1A, a set of cameras are in charge of capturing a plurality of views of a same scene. Images representing the different views are transmitted to a system 11. The system 11 is in charge of generating a representation from the plurality of views allowing generating not only the captured views but new views of the scene. The system 11 then encodes and transmits this encoded representation to a system 13 via a network 12. The system 11 may be a computer, a server or any device capable of generating, encoding and transmitting the representation.

The communication channel 12 is a wired (for example Internet or Ethernet) or a wireless (for example WiFi, 3G, 4G or 5G) network link.

The system 13, that could be for example a set top box, receives and decodes the encoded representation to generate at least one view of the scene.

Each generated view is then transmitted to a display system 15 using a communication channel 14, that could be a wired or wireless network. The display system 15 then displays at least one of the generated views.

In an embodiment, the system 13 is comprised in the display system 15. In that case, the system 13 and display 15 are comprised in a TV, a computer, a tablet, a smartphone, a head-mounted display, or any system allowing virtual reality (VR) / mixed reality (MR) / augmented reality (AR).

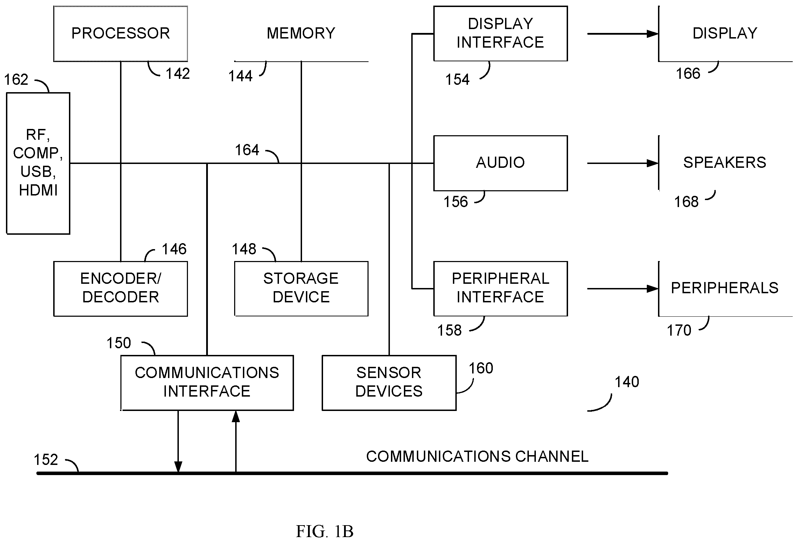

**FIG. 1B** illustrates an example of system 140 implementing the system 11 or the system 13 in which embodiments of the present disclosure can be implemented.

The system 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, vehicle control and/or entertainment system, a head mounted display, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. The processor 142 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 142 may include at least one central processing unit (CPU), embedded memory, input and output interfaces. All these types of processors are electronic circuitries.

Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process raw image data/encoded image data (such as captured views, new views, point clouds, etc) and to provide encoded image data/decoded image data. The encoder/decoder module 146 may include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Instructions for execution by the processor 142 and/or the encoder/decoder module 146 may be stored in the storage device 148 and subsequently loaded into memory 144 for execution by the processor 142. In some embodiments, one or more of processor 142, memory 144, storage device 148, and encoder/decoder module 146 may store one or more items when performing the processes disclosed herein. Such items may include input raw image data, reconstructed image data, decoded image data or portions thereof, bitstreams, chunks, matrices, variables, operational logic, and intermediate and/or final results from processing of equations, formulas, or operations.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 146) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for coding and decoding operations.

The system 140 may obtain or receive information via one or more input devices, interfaces, and/or ports as indicated in input block 162. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 140 to other devices via USB and/or HDMI ports or connections. Various forms of input processing may be implemented, for example, by and/or within a separate input processing device or the processor 142.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes a communication interface 150 that enables wired and/or wireless communication with other devices, e.g., via a communication channel 152 (corresponding to communication channel 12 or 14 in FIG. 1A). The communication interface 150 may include one or more transceivers, modems, network cards and the like. The communication channel 152 may be or include wired and/or wireless mediums.

In some embodiments, data may be streamed to the system 140 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 140 via the communication interface 150 and communication channel 152, whereby the system 140 may obtain data streamed from streaming applications (e.g., OTT (Over The Top) services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner. Additionally, various embodiments use wireless networks other than Wi-Fi, for example a cellular network or a Bluetooth network.

The system 140 may provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), head-mounted display, AR, VR, MR systems, or other device or user equipment. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as a control module for an extended reality display (such as control modules), the user's position and orientation may be used in determining how to render image data such that the user perceives the correct portion of a virtual object or virtual scene from the correct point of view. In the case of a user equipment such as a head-mounted display devices, the position and orientation of the device itself may be used to determine a position and orientation of a user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

A User Equipment (UE) may correspond to any eXtended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

During last years, different volumetric representations have been proposed to be used in the context of New View Generation (NVG). NVG generates new views from arbitrary viewing angles of a scene when only a limited number of input views have been captured. In particular, 3D Gaussian (3DG) splatting has emerged as a new scene representation that is able to realistically render volumetric data from a multi-view capture with high quality according to Kerbl, B. K. (2023). 3D Gaussian Splatting for Real-Time Radiance Field Rendering, ACM Transactions on Graphics (TOG), (pp. 1-14*).*

*Kerbl* is understood to explain how to generate, in a reasonable time, a 3DG representation from a discrete set of views of the same static 3D scene, thus enabling high-quality fast rendering of virtual views. Since then, numerous papers have improved the original method and used this new scene representation into a variety of application domains.

As already mentioned above, a main drawback of 3DG splatting (3DGS) is that it requires a large amount of memory for a storage of the 3DGs and a large bitrate for a transmission of the 3DGs.

In the following, various embodiments propose to reduce the storage and bitrate by representing 3DGs as isotropic spheres.

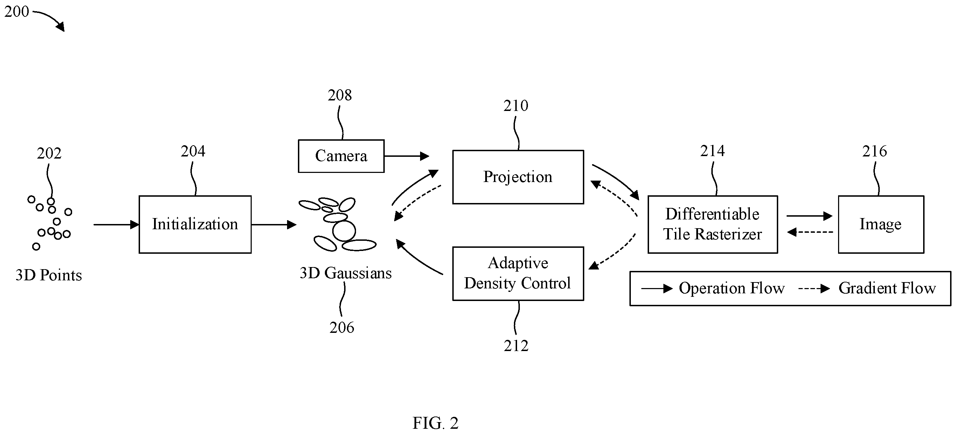

FIG. 2 illustrates an example 3DG generation process 200 according to some embodiments.

The 3DG generation process of 200 (detailed in *Kerbl*) is for example implemented by the processor 142 of the system 140 when the system 140 implements the system 11.

We suppose here that a pre-processing process, not represented, generates a sparse set of 3D points 202 from the plurality of views generated by the set of cameras 10.

In a step 204, the processor 142 applies an initialization process using a sparse set of 3D points 202. During step 204, the processor 142 generates initial isotropic 3D Gaussians 206 centered at each point from the sparse set of 3D points 202.

Starting from this initialization process in step 204, an iterative optimization process based on steps 210, 214 and 212 learns a 3DG based representation of the 3D scene from the plurality of view 208 generated, for example, by the set of cameras 10.

In step 210, the processor 142 applies a projection process using the 3DGs 206 and camera parameters of the plurality of views 208.

In step 214, the processor 142 applies a process of differentiable tile rasterizering to an output of projection process of step 210. The process of differentiable tile rasterizering of step 214 outputs rendered images at training input views positions of the plurality of views. During step 214, differences between rendered image and training input views are computed and errors are propagated backward to the iterative optimization process through a gradient flow.

In step 212, a process of adaptive density control performs splitting and cloning operations and outputs a revised version of the 3DGs 206. This revised version is updated in an opposite direction of a gradient (stochastic gradient descent algorithm) and inputted to step 210 for a new iteration.

The iterative optimization process of step 210, 214 and 212 repeats until the differences between rendered images and training input views are within a threshold of a stop criteria or until a maximum number of iterations is reached.

After the iterative optimization process is done, step 214 can output an image 216 at any virtual view position.

Another output of the process of FIG. 2 is the iteratively optimized 3DGs 206. Formally, a 3DG is defined as an object in the 3D space as follows: $G \left(X\right) = {e}^{- \frac{1}{2} {\left(X-μ\right)}^{T} {Σ}^{- 1} \left(X-μ\right)}$

The object is characterized by its center *µ* = (*x, y, z*), a 3D covariance matrix *Σ*, where *Σ* can be decomposed into a scaling matrix S (with parameters (i.e., matrix coefficients) *s*₁, *s*₂ and *s*₃) and a rotation matrix R (encoded into a unit quaternion q with coefficients *q*₁, *q*₂ *, q*₃ and *q*₄) as follows: $Σ = {RSS}^{T} {R}^{T}$ Where .*^{T}* indicates the transpose.

One can note that the scaling matrix S is diagonal: $S = \left(\begin{matrix}{s}_{1} & 0 & 0 \\ 0 & {s}_{2} & 0 \\ 0 & 0 & {s}_{3}\end{matrix}\right)$

Besides the geometric description of each 3DG, other attributes are considered such as the opacity *α* and the color c, which is usually a list of spherical harmonics {*cₙ*|*n* = 1,*...,N*}.

Then, given a list of 3DGs representing a 3D scene, and an image position of a new view, a synthetized image is generated in the new position via the projection of all 3DGs in the image plane. This operation, also called *splatting,* corresponds to an *α*-blending of the different 3DGs. In detail, given a sorted list of 3DGs *N*, a color of a pixel in the new image is given by the following formula: $C = {\sum }_{i ∈ N} {c}_{i} α {′}_{i} {\prod }_{j = 1}^{i - 1} \left(1-α{′}_{j}\right)$ where *cᵢ* is the learnt color of the i-th Gaussian, *α'ⱼ = αⱼ gⱼ*(*x*); *αⱼ* being a *j*-th Gaussian opacity and *gⱼ*(*x*) a j-th Gaussian projection on the new image plane.

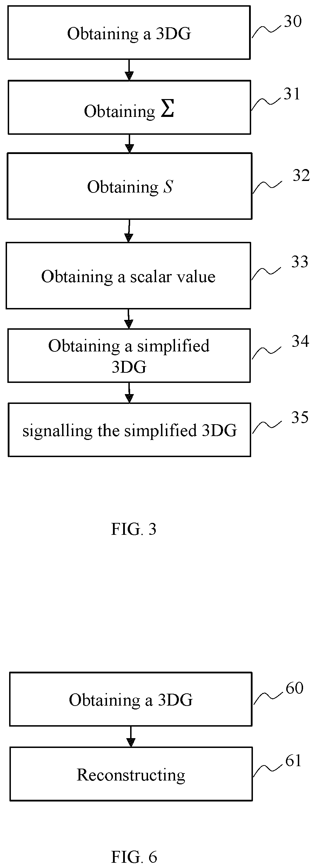

FIG. 3 illustrates various embodiments of a process signaling a simplified representation of a 3DG.

The process of FIG. 3 is for example implemented by the processor 142 of the system 140 when the system 140 implements the system 11.

In a step 30, the processor 142 obtains a 3DG. For instance, the 3DG is one of the iteratively optimized 3DGs 206 representing a 3D scene. As seen above, this 3DG is represented by the formula (1). In the following, a 3DG based on the formula (1) is also called a *traditional 3DG.*

In a step 31, the processor 142 obtains the covariance matrix *Σ* from the 3DG given by formula (1).

In a step 32, the processor 142 obtains the scaling matrix S resulting from the decomposition of the covariance matrix *Σ* of equation (2).

In a step 33, the processor 142 obtains a scalar value S' from the 3DG. Step 33 is detailed below.

In a step 34, the processor 142 obtains a simplified representation of the 3DG based on the scalar value S' wherein the covariance matrix *Σ* is replaced by a new covariance matrix *Σ'*. $Σ ′ = R . {\left(S′\right)}^{2} . {R}^{T}$

The simplified representation of the 3DG is given by the following formula: $G \left(X\right) = {e}^{- \frac{1}{2} {\left(X-μ\right)}^{T} {\left(Σ′\right)}^{- 1} \left(X-μ\right)}$

In the following, a simplified representation of a 3DG is also called *simplified 3DG.*

In a step 35, the processor 142 signals the simplified representation of the 3DG instead of the 3DG in a bitstream.

The bitstream may be transmitted, for example, to the system 13.

In a first embodiment, the scalar value S' is obtained in step 33 by the following formula: $S ′ = {\left({s}_{1}\times {s}_{2}\times {s}_{3}\right)}^{\frac{1}{3}}$

In this first embodiment, only one parameter (the scalar value S') is encoded when encoding the simplified representation of the 3DG (i.e., formula (4) instead of three parameters (*s*₁, *s*₂ and *s*₃) when encoding the 3DG (i.e., formula (1)). Hence, a bitrate reduction is obtained.

When a 3DG is mainly seen by a direction *̅d̅*̅, its dimension along this direction has a little impact for rendering. This can occur when the cameras used to capture the scene have a limited coverage of the scene, for example when using coplanar placed cameras, or when the 3DG is occluded by other 3DGs for certain directions, limiting the number of directions it can be seen. Thus, the 3DG may be splatted to a 2DG in the direction *̅d̅*̅.

In a 3D space, a 3DG can be viewed as an ellipsoid E. A splatting of a 3DG to a 2DG in the direction *̅d̅*̅ may be viewed as an orthogonal projection in the direction *̅d̅*̅ of the ellipsoid E representative of the 3DG on a plan *P.* In that case a result of the projection is an ellipse *Eₚ*.

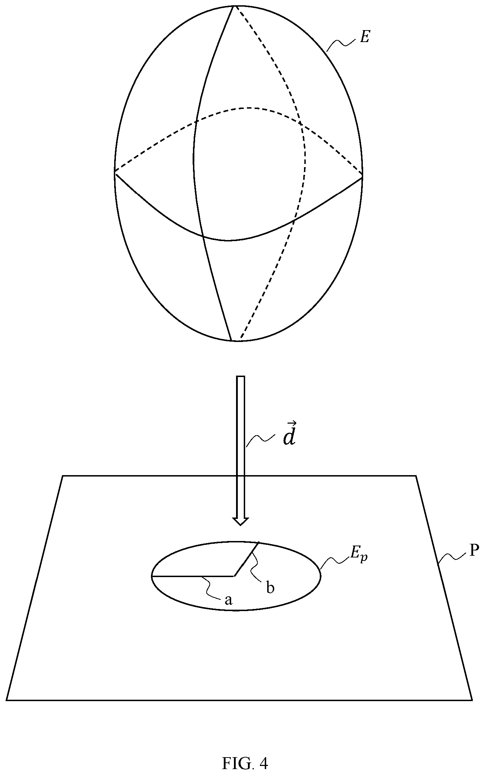

FIG. 4 illustrates an orthogonal projection of an ellipsoid E.

An ellipse may be represented by two dimensions: *a* representing a semi-major axis and *b* representing the semi-minor axis. An example of equation representing an ellipse is the following: $\frac{{x}^{2}}{{a}^{2}} + \frac{{y}^{2}}{{b}^{2}} = 1$

In a second embodiment, the scalar value S' is obtained from the semi-major axis *a* and the semi-minor axis b as follows: $S ′ = {\left(a\times b\right)}^{\frac{1}{2}}$

In this second embodiment, again, only one parameter (the scalar value S') is encoded when encoding the simplified representation of the 3DG (i.e., formula (4) instead of three parameters (*s*₁, *s*₂, and *s*₃) when encoding the 3DG (i.e., formula (1)).

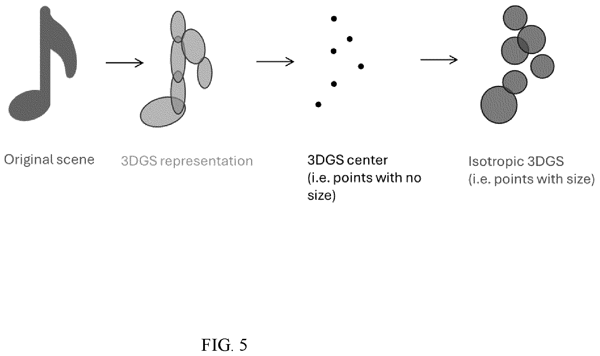

FIG. 5 illustrates the first and second embodiment. The simplification of the scale parameters (i.e., of the parameters *s*₁, *s*₂ and *s*₃ of the scaling matrix S) process is like giving a size to a point.

In a third embodiment, rather than using a geometric mean as in equations (5) and (6), the maximal value max(*s*₁, *s*₂, *s*₃) or max(a,b) may be used. Any other method may be employed.

A consequence of the previous embodiments is that no rotation is required anymore, since a sphere is isotropic. Hence, in a fourth embodiment, an additional size reduction is obtained by skipping a signaling of the coefficients *q*₁, *q*₂ *, q*₃ and *q*₄ of the unit quaternion q.

In that case the covariance matrix Σ is replaced by a scalar value (*S'*)² and the simplified representation of the 3DG is given by the following formula: $G \left(X\right) = {e}^{- \frac{1}{2} {\left(X-μ\right)}^{T} {\left({\left(S′\right)}^{2}\right)}^{- 1} \left(X-μ\right)}$

As changing an ellipsoid into a sphere can introduce distortions when reprojecting the 3DGs to synthesize a view, in a fifth embodiment, it is proposed to apply the first, second, third or fourth embodiment to only a part of the 3DGs. For instance, the first, second, third or fourth embodiment is applied only to the 3DGs that exhibit a small eccentricity, i.e., the ones that are the more like a sphere, and the other are kept unchanged. In an example, the eccentricity e may be obtained as follows: $e = \sqrt{1 - \frac{{m}^{2}}{{M}^{2}}}$ where m = *min*(*s*₁,*s*₂,*s*₃) and *M* = *max*(*s*₁, *s*₂,*s*₃). In another example, m = *min*(*s*₁²,*s*₂²,*s*₃²) and *M* = *max*(*s*₁²,*s*₂²,*s*₃²). When *m* and *M* are close to each other, the eccentricity e tends towards "0". When m and *M* are very different, the eccentricity e tends towards "1".

Alternatively, the eccentricity e may be computed as follows: $e = \sqrt{1 - \frac{{b}^{2}}{{a}^{2}}}$

For selecting the 3DGs to simplify (i.e., on which applying the first, second, third or fourth embodiment), either an absolute threshold *tₐ*, a relative threshold *tᵣ* or a percentage *pₜₒₜ* of the total number of 3DGs may be used. Table TAB1 provides example of process of selecting the 3DGs of a set of *N* 3DGs to simplify:

**Table TAB1**

| | |
|---|---|
| Absolute threshold (e.g. *tₐ* = 0.1) | *for i in range* [0, *N*[ : |
| | *if e*[*i*] < *tₐ*: |
| | *then simplify 3D Gaussian with index i* |
| Relative threshold (e.g. *tᵣ* = 0.25) | *for i in range* [*0, N*[ : |
| | *if e[i]* < *E* * *tᵣ*: |
| | *then simplify 3D Gaussian with index i* |
| | where $E = {max}_{idx} \left(e\left[idx\right]\right)$ |
| Percentage (e.g. *pₜₒₜ* = 5%) | *for j in range* [*0*, *N*[ : |
| | *if j < N * pₜₒₜ* : |
| | *then simplify 3D Gaussian with index j* |
| | Where *j* is an index on the sorted list of 3DGs by increasing eccentricity. |

Having two different types of 3DGs (simplified or traditional) means that the encoder should signal the type of 3DG to the decoder, to use the correct parsing for each one. In a sixth embodiment a symbol is transmitted to signal the type of each 3DG. For instance, a one-bit syntax element *type* coding the type of 3DG is signaled for each 3DG:
*type=0* for traditional 3DG,
*type=1* for simplified 3DG.

This additional bit for each 3DG can be balanced by the reduction in size due to the reduction of the parameters (scale parameters, rotation coefficients).

FIG. 6 illustrates various embodiments of a process of receiving a simplified representation of a 3DG.

The process of FIG. 6 is for example implemented by the processor 142 of the system 140 when the system 140 implements the system 13.

In a step 60, the processor 142 obtains a simplified representation of a 3DG. For example, the 3DG belongs to a set of 3DGs representing a 3D scene transmitted by the system 11. The simplified representation is one of the simplified representations described in relation to the previous embodiments.

In a step 61, the processor 142 reconstructs a part of the 3D scene based on the obtained simplified representation of the 3DG. In an embodiment, the processor 142 determines whether the 3DG is a traditional 3D Gaussian or a simplified 3DG using the one-bit syntax element *type.*

Regarding a signaling (i.e., an encoding) of a 3D scene, one particularity of the sixth embodiment is that a syntax element *type* is signaled for each 3DG representing a part of the 3D scene to indicate the type of the 3DG (i.e., traditional or simplified).

Let's assume that the number of 3DGs to signal is *N, Nₛ* is the number of simplified 3DGs and *Nₜ* is the number of traditional 3DGs: *N*=*Nₛ* + *Nₜ.*

With the sixth embodiment, the gain in terms of bitrate obtained by using the simplified 3DGs, for which the number of parameters to signal is reduced compared to traditional 3DG, is reduced due to the signaling of the syntax elements *type.*

In the following, a seventh embodiment is proposed which is more economical in terms of bitrate.

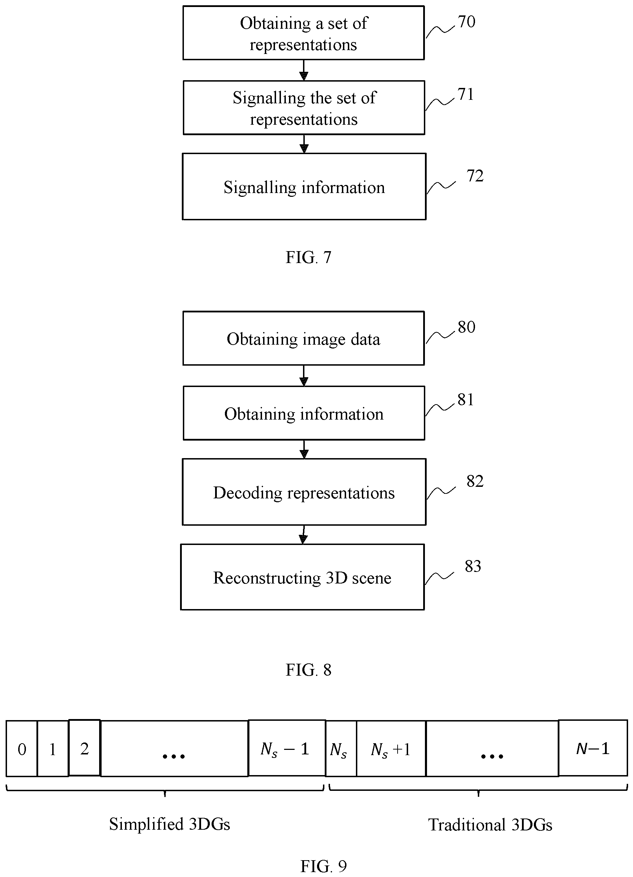

FIG. 7 represents an example of signaling of a set of representations representative of a 3D scene according to the seventh embodiment.

The process of FIG. 7 is for example implemented by the processor 142 of the system 140 when the system 140 implements the system 11.

In a step 70, the processor 142 obtains a set of representations. Each representation represents one subpart of a plurality of subparts representative of the 3D scene. Each representation is of a first type or a second type. The first type is for example the traditional 3DG based on a covariance matrix. The second type is for example the simplified 3DG in which the covariance matrix is replaced by an element depending on the scalar value S' as in the first, second, third and fourth embodiment. The determination of the type of each 3DG is based on the fifth embodiment.

In a step 71, the processor 142 signals the set of representations in a bitstream (i.e., in image data). The bitstream is organized such that all representations of a same type are signaled consecutively. In an example, the representations are sorted, and signaled such that the simplified 3DGs are signaled first (with indices in [0, Ns-1]) and then, the traditional 3DGs are transmitted (with indices in [Ns, N-1]).

FIG. 9 illustrates an organization of a bitstream comprising the representations.

In a step 72, the processor 142 signals a first information representative of a position of a last representation of the first or the second type in the bitstream. The first information is also representative of a number of representations of one type among the first or the second type. For example, the first information is an index *Nₛ* - 1 of the last representation of type simplified 3D gaussian in the order of signaling the representations in the bitstream. In another example, the first information is an index *Nₛ* of the first representation of type traditional 3D gaussian. The first information is for example signaled by a "4" bytes (32 bits) (or "2" bytes (16 bits)) syntax element *typeIdx.*

Table TAB1 represents a first example of high level syntax (HLS) element *Simplified_3DG* used for signaling the first information.

**Table TAB1**

| Simplified_3DG | **Descriptor** |
|---|---|
| { | |
| TypeIdx | u(32) |
| } | |

A second example of HLS element *Simplified_3DG* is proposed in Table TAB2. In the HLS element *Simplified_3DG* of table TAB2, a first one-bit syntax element *simplified_3DG_present_flag* is set to "1" to inform a decoder that some simplified 3DGs are present in the bitstream. The "32" (or "16) bits syntax element *TypeIdx* represents the first information.

**Table TAB2**

| Simplified_3DG | **Descriptor** |
|---|---|
| { | |
| simplified_3DG_present_flag | u(1) |
| if( simplified_3DG_present_flag) { | |
| TypeIdx | u(32) |
| } | |
| } | |

In some cases, no representation of type simplified 3DG is signaled. In this case the syntax element *simplified_3DG_present_flag* is set to "0".

A particular case occurs when only representations of type simplified 3DGs are signaled (i.e., *Ns*=*N*)*.* In a variant of the seventh embodiment, this situation is signaled by a specific value of the syntax element *typeIdx.* For instance, *typeldx =* 2³² - 1 or *typeIdx=*-1 or any predefined value known by the decoder could be used.

In another variant of the seventh embodiment, it is proposed to signal both the values *Ns* and *Nt,* to inform the decoder of the number of respectively simplified/traditional 3DGs. An example of syntax compliant with this variant of the seventh embodiment is provided by table TAB3. Having a "0" for *Ns* (respectively *Nt*) means that no simplified 3DG (respectively no traditional 3DG) is present in the bitstream.

**Table TAB3**

| Simplified_3DG | Descriptor |
|---|---|
| { | |
| Ns | u(32) |
| Nt | u(32) |
| } | |

In another variant, represented in table TAB4, the signaling of *Ns* and *Nt* depends on the value of the syntax element *simplified_3DG_present_flag.*

**Table TAB4**

| Simplified_3DG | **Descriptor** |
|---|---|
| { | |
| simplified_3DG_present_flag | u(1) |
| if( simplified_3DG_present_flag) { | |
| Ns | |
| Nt | u(32) |
| } | |
| } | |

**FIG. 8** represents an example of decoding of a set of representations representative of a 3D scene according to the seventh embodiment.

The process of FIG. 8 is for example implemented by the processor 142 of the system 140 when the system 140 implements the system 13.

In a step 80, the processor 142 obtains a bitstream representing a 3D scene. The bitstream is for instance the one generated by the system 11 when the system 11 applies the process of FIG. 7.

In a step 81, the processor 142 obtains from the bitstream at least one first information representative of a number of representations of one type among the first and the second type in the bitstream. Typically, the processor 142 obtains one of the HLS structure of tables TAB1, TAB2, TAB3 or TAB4 from the bitstream and extracts the syntax element *TypeIdx* or the syntax elements *Ns* and *Nt.*

In a step 82, the processor 142 decodes at least one representation of the set of representations in function of its type. The type of the at least one representation is determined based on a position of the representation in the bitstream and on the at least one first information. Indeed, since the system 13 knows that all representations of the type simplified 3DG are encoded first in the bitstream and then followed by all representations of the type traditional 3DG, by comparing the index (i.e. the position) of a particular representation of the bitstream to the value of the syntax element *TypeIdx* or to the value of the syntax element *Ns,* the system 13 is able to deduce the type of this particular representation. One can also note that the system 13 doesn't necessarily needs to decode all representations if it is configured to reconstruct only a subpart of the 3D scene.

In a step 83, the processor 142 reconstructs at least partially the 3D scene based on the decode representations.

One or more embodiments provide a computer program comprising instructions which when executed by one or more processors cause such processors to perform the process of FIG. 3 according to any of the embodiments described above. One or more embodiments also provide a computer readable storage medium having stored thereon instructions for the process of FIG. 3.

One or more embodiments provide a computer readable storage medium having stored thereon 3DGs generated using the process of FIG. 3. One or more embodiments also provide a method and apparatus for transmitting or receiving 3DGs generated according to the process of FIG. 3.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

The various embodiments described herein provide at least the following features, devices or aspects, alone or on any combination, across various claim categories and types:
i. Encoding, into coded image data, syntax elements that can enable the decoder to decode the coded image data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

The present disclosure refers to information, for example, syntax elements, that can be transmitted or stored. Such information can be packaged or arranged in a variety of manners. These manners for example includes manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a type of 3DG, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

Names of variables or syntax elements indicated in this document are examples of possible names but may be replaced by other names.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:
obtaining (70) a set of representations, each representation representing one subpart of a plurality of subparts representative of a 3D scene and being of a first type or a second type, the first type being a 3D gaussian based on a covariance matrix, the second type being a simplified 3D gaussian in which the covariance matrix is replaced by an element depending on a scalar value;
signaling (71) the set of representations in image data, the image data being organized such that all representations of a same type are signaled consecutively; and,
signaling (72) at least one first information representative of a number of representations of one type among the first and the second type in the image data.

2. A device comprising electronic circuitry configured for:
obtaining (70) a set of representations, each representation representing one subpart of a plurality of subparts representative of a 3D scene and being of a first type or a second type, the first type being a 3D gaussian based on a covariance matrix, the second type being a simplified 3D gaussian in which the covariance matrix is replaced by an element depending on a scalar value;
signaling (71) the set of representations in image data, the image data being organized such that all representations of a same type are signaled consecutively; and,
signaling (72) at least one first information representative of a number of representations of one type among the first and the second type in the image data.

3. The method of claim 1 or the device of claim 2 wherein the signaling of the at least one first information depends on a third information indicating with a first value that the image data comprise representations of the second type and with a second value that the image data comprise only representations of the first type.

4. The method of claim 1 or 3 or the device of claim 2 or 3 wherein the image data are organized such that all representations of the second type precede all representations of the first type in the image data.

5. The method of claim 3 or the device of claim 3 wherein the at least one first information comprises an index of a last representation of the second type in an order of signaling of the representations in the image data.

6. The method of claim 3 or the device of claim 3 wherein the at least one first information comprises an information representative of an index of a first representation of the first type in an order of signaling of the representations in the image data.

7. The method of any previous claim from claim 1, 3 to 6 or the device of any previous claim from claim 2 to 6 wherein, the at least one first information comprises a second information signaling a number of representations of another type among the first type and the second type.

8. A method comprising:
obtaining (80) image data representing a 3D scene, the image data comprising a set of representations organized such that all representations of a same type are signaled consecutively;
obtaining (81) from the image data at least one first information representative of a number of representations of one type among a first and a second type in the image data, each representation representing one subpart of a plurality of subparts representative of the 3D scene, the first type being a 3D gaussian based on a covariance matrix, the second type being a simplified 3D gaussian in which the covariance matrix is replaced by an element depending on a scalar value;
decoding (82) at least one representation of the set of representations in function of its type, the type of the at least one representation being determined based on a position of the representation in the image data and on the at least one first information; and,
reconstructing (83) at least partially the 3D scene based on the decoded at least one representation.

9. A device comprising electronic circuitry configured for:
obtaining (80) image data representing a 3D scene, the image data comprising a set of representations organized such that all representations of a same type are signaled consecutively;
obtaining (81) from the image data at least one first information representative of a number of representations of one type among a first and a second type in the image data, each representation representing one subpart of a plurality of subparts representative of the 3D scene, the first type being a 3D gaussian based on a covariance matrix, the second type being a simplified 3D gaussian in which the covariance matrix is replaced by an element depending on a scalar value;
decoding (82) at least one representation of the set of representations in function of its type, the type of the at least one representation being determined based on a position of the representation in the image data and on the at least one first information; and,
reconstructing (83) at least partially the 3D scene based on the decoded at least one representation.

10. The method of claim 8 or the device of claim 9 wherein the obtaining of the at least one first information depends on a third information indicating with a first value that the image data comprise representations of the second type and with a second value that the image data comprise only representations of the first type.

11. The method of claim 8 or 10 or the device of claim 9 or 10 wherein the image data are organized such that all representations of the second type precede all representations of the first type in the image data.

12. The method of claim 11 or the device of claim 11 wherein the at least one first information comprises an index of a last representation of the second type in an order of signaling of the representations in the image data.

13. The method of claim 11 or the device of claim 11 wherein the at least one first information comprises an information representative of an index of a first representation of the first type in an order of signaling of the representations in the image data.

14. The method of any previous claim from claim 8, 10 to 13 or the device of any previous claim from claim 9 to 13 wherein, the at least one first information comprises a second information signaling a number of representations of another type among the first type and the second type.

15. Non-transitory information storage medium storing program code instructions for implementing the method of any previous claim 1 and 3 to 7, 8, and 10 to 14.
